# EUROPEAN PATENT SPECIFICATION

(11) **EP 2 472 106 B1**
(45) Date of publication and mention of the grant of the patent: **08.10.2014**
(21) Application number: 10811720.1
(22) Date of filing: 17.08.2010
(51) Int. Cl.: F03D 7/04, F03D 11/00, F16H 57/027, F03D 7/02, F16H 1/22

(54) **YAW DRIVING DEVICE FOR WIND TURBINE**
GIERANTRIEBSVORRICHTUNG FÜR WINDTURBINEN
DISPOSITIF D'ENTRAÎNEMENT EN LACET POUR ÉOLIENNE

(30) Priority: 27.08.2009 JP 2009196586
(43) Date of publication of application: 04.07.2012
(73) Proprietor: Nabtesco Corporation, Tokyo 102-0093 (JP)
(72) Inventor: FUJIKAWA, Tomohiro, Fuwa-gun Gifu 503-2121 (JP); HOSODA, Shigeru, Fuwa-gun Gifu 503-2121 (JP)
(74) Representative: Isarpatent
(86) International application number: PCT/JP2010/063848
(87) International publication number: WO 2011/024670

(56) References cited:
- JP-A- 4 004 348
- JP-A- 59 013 171
- JP-A- 2005 061 519
- JP-A- 2007 127 139
- JP-A- 2009 168 054
- JP-U- 3 145 693
- JP-U- 64 022 535

## Description

### Technical Field

The present invention relates to a yaw driving device for a wind turbine for provision in a wind turbine and for use as a driving device for turning a nacelle of the wind turbine.

### Background Art

A wind turbine is provided with a yaw driving device for a wind turbine (a wind turbine yaw driving device) for use as a driving device for yaw driving for turning a nacelle provided above a tower of the wind turbine (for example, see Patent Document 1). The yaw driving device for a wind turbine disclosed in Patent Document 1 is configured as a speed reducer (50) to which the rotational driving force from an electric motor (31) is transmitted, and is provided in a turning drive device (30A) together with the electric motor (31). This wind turbine yaw driving device includes a speed reducing mechanism that reduces and transmits the rotational driving force that is input from the electric motor (31) disposed thereabove, and a case inside of which the speed reducing mechanism is disposed. The speed reducing mechanism is configured to output the rotational driving force from an output shaft (52) to which is attached a pinion (53) for meshing with a ring gear (internal teeth gear 13a) located on top of the tower (2) of the wind turbine.

In a wind turbine yaw driving device as disclosed in Patent Document 1, a lubricant oil is sealed in the case in order to ensure lubricity at the time of operating the speed reducing mechanism during a yaw driving operation. Also, seal elements serving as component members for sealing the lubricant oil in the case are disposed, for example, between the electric motor and the case, or between the case and the output shaft. However, there is the possibility that these seal elements may be broken by an excessive increase in the pressure of a gas sealed in the case together with the lubricant oil due to the influence of frictional heat generated during operation of the speed reducing mechanism or the influence of the temperature outside the case. Here, in order to reduce the increased pressure of the gas in the case, it is conceivable to provide the case with a nipple that can be opened and closed, and perform a manual operation by which the nipple is periodically loosened and opened to communicate between the inside of the case and the outside thereof. However, due to the need for the manual operation, the time and effort required for management is increased. Moreover, the timing at which the manual operation can be performed is limited, and therefore there is the possibility that the seal elements may be broken if the above-described operation cannot be performed before the pressure of the gas in the case reaches the fracture pressure of the seal elements.

In contrast, a planet gear speed reducer used for a transportation vehicle including an upper swing body as disclosed in Patent Document 2 is known as a speed reducer provided with a mechanism that automatically reduces the pressure of the gas in the case without a manual operation at the occurrence of an increase in the pressure of the gas in the case. The speed reducer disclosed in Patent Document 2 is provided with a breather (65) open to air for a case (housing 48) in which the speed reducing mechanism is disposed. Note that unlike a wind turbine yaw driving device, a pinion (pinion gear 60) provided at an output shaft (56) is disposed above the speed reducer disclosed in Patent Document 2, and a drive motor (oil-hydraulic motor 8) for inputting the rotational driving force is disposed below the speed reducer.

Patent Document 3 describes a yaw driving device for a wind turbine with a speed reducing mechanism to reduce a rotational speed. The reduction gear used in the yaw driving device of the wind power generator is used for a speed reduction in three stages, and is constituted by an eccentric oscillation type reduction gear mechanism. The speed reducing mechanism is disposed inside of a case to which an electric motor can be attached. An oil seal which seals lubricant oil in the case is provided between the case and an output shaft.

Patent Document 4 describes a gear reducer within a case, wherein the case comprises a ventilation hole to prevent the increase of pressure beyond a defined value. The ventilation hole is blocked by a steel ball connected to a spring providing a certain counter-pressure.

### Citation List

### Patent Document

Patent Document 1: JP 2004-232500A (pages 6-7, FIG. 1, FIG. 4)
Patent Document 2: JP 8-324323A (pages 5-6, FIG. 4)
Patent Document 3: JP 2005 061519 A
Patent Document 4: JP 4 004348

### Disclosure of the Invention

### Problem to be Solved by the Invention

By using a speed reducer as disclosed in Patent Document 2, which is provided with a breather, in a wind turbine yaw driving device as disclosed in Patent Document 1, it is possible to automatically reduce the pressure of the gas in the case at the occurrence of an increase in the pressure of the gas in the case without a manual operation, thus preventing the breakage of the seal elements. However, since the speed reducer disclosed in Patent Document 2 reduces the pressure of the gas in the case with a breather open to air, it constantly permits the entry of outside air and thus may allow foreign substances such as unnecessary water and dust to enter into the case, together with outside air. Entry of foreign substances into the case may lead to operational failure or damage of the speed reducing mechanism. Further, the configuration open to air may lead to the leakage of the lubricant oil in the case to the outside. Here, from the viewpoint of suppressing an increase in the pressure of the gas in the case and the leakage of the lubricant oil in the case, it is conceivable to attach a volume body for mitigating the pressure increase, such as a tank that is closed to the outside and for which a large gas volume is ensured, with the volume body in communication with the case. In this case, however, a large tank is required to sufficiently mitigate the pressure increase, which results in an increase in the size of the mechanism of a yaw driving device for a wind turbine.

In view of the foregoing circumstances, it is an object of the present invention to provide a yaw driving device for a wind turbine that can automatically reduce the pressure of a gas in a case without a manual operation at the occurrence of an increase in the pressure of the gas in the case, thus preventing the breakage of seal elements, suppressing the leakage of a lubricant oil in the case and the entry of foreign substances into the case, and suppressing an increase in the size of the mechanism. Means for Solving the Problem

A yaw driving device for a wind turbine according to a first aspect of the present invention for achieving the above-described object is a yaw driving device for a wind turbine for provision in a wind turbine and for use as a driving device for turning a nacelle of the wind turbine, the device including: a speed reducing mechanism that reduces and transmits a rotational driving force input from an electric motor, and outputs the rotational driving force from an output shaft provided with a pinion for meshing with a gear fixed to a tower of the wind turbine; a case to which the electric motor can be attached and inside of which the speed reducing mechanism is disposed; a first seal member that is disposed between the electric motor and the case for sealing a lubricant oil in the case; a seal unit that is disposed between the case and the output shaft for sealing the lubricant oil in the case; and a relief valve that includes a communication path in communication with the case and a valve body that opens an opening of the communication path to the outside, located on an upper end side of the communication path, in response to an increase in the pressure of the gas in the case and closes the aforementioned opening in response to a decrease in the aforementioned pressure, and that is provided on an upper end side of the case where the electric motor, which can be disposed above the case, can be attached. In the yaw driving device for a wind turbine of the first aspect of the present invention, a shoulder portion of the case that is formed extending inward in a bending manner in a step form and that is disposed above the oil level of the lubricant oil in the case, and a wall portion of the case that is disposed inside of the shoulder portion in the radial direction of the case and that extends in an up-down direction are formed at a portion on the upper end side of the case, and the relief valve is attached to the case so as to be disposed projecting upward, and is disposed such that an opening of the communication path into the case is located inside of the shoulder portion and outside of the wall portion in the case.

According to this aspect of the invention, when the pressure of the gas in the case is increased due to the influence of frictional heat generated during operation of the speed reducing mechanism or the influence of the temperature outside the case, the relief valve is operated such that the valve body opens the communication path. Accordingly, the high-pressure gas in the case is released through the relief valve to the outside. This enables the pressure of the gas in the case to be automatically decreased without a manual operation at the occurrence of an increase in the pressure of the gas in the case. Also, it is possible to prevent the breakage of the first seal member provided as seal elements, which are component members serving as the seal elements for sealing the lubricant oil in the case, and the breakage of seal elements provided in the seal unit. Further, when the pressure of the gas in the case is decreased due to partial release of the high-pressure gas, the relief valve is operated such that the valve body closes the communication path again. Accordingly, the communication path is opened only when the pressure of the gas in the case becomes high, and the communication path is maintained in the closed state when the pressure of the gas in the case is a pressure that could not possibly cause the breakage of the seal elements. This can suppress the entry of foreign substances into the case.

Further, according to the present invention, the relief valve is provided projecting upward at the upper end portion of the case, and is disposed at a position spaced above the oil level of the lubricant oil in the case. Also, the relief valve is disposed such that the opening of the communication path of the relief valve into the case is located inside of the shoulder portion bent in a step form and outside of the wall portion extending in the up-down direction in the case. Accordingly, the lubricant oil that has been scattered due to the stirring of the lubricant oil that occurs in the center portion of the case with the rotation of the speed reducing mechanism in the case collides with the wall portion of the case, and drops down along the wall portion. This makes it possible to efficiently prevent the lubricant oil that has been scattered due to the stirring at the center portion of the case from reaching the opening of the relief valve into the case, thus suppressing the leakage of the lubricant oil to the outside while the communication path is open. Further, the lubricant oil that rises along the inner wall of the case with the rotation of the speed reducing mechanism in the case collides with the shoulder portion of the case that is disposed above the oil level of the lubricant oil in the case and drops down. This makes it possible to efficiently prevent the lubricant oil that rises along the inner wall of the case from reaching the opening of the relief valve into the case, thus suppressing the leakage of the lubricant oil to the outside while the communication path is open. Accordingly, it is possible to suppress the leakage of the lubricant oil in the case to the outside. Also, the relief valve is provided as a small structure including the communication path and the valve body, and is disposed compactly so as to project upward on the upper end side of the case on which the electric motor is attached. Accordingly, it is also possible to suppress an increase in the size of the mechanism of the yaw driving device for a wind turbine provided with the relief valve.

Therefore, according to the present invention, it is possible to provide a yaw driving device for a wind turbine that can automatically reduce the pressure of the gas in the case without a manual operation at the occurrence of an increase in the pressure of the gas in the case, thus preventing the breakage of the seal elements, suppressing the leakage of the lubricant oil in the case and the entry of foreign substances into the case, and preventing an increase in the size of the mechanism.

According to a yaw driving device for a wind turbine according to a second aspect of the present invention, in the yaw driving device for a wind turbine of the first aspect of the present invention, the case includes: a case main body that is formed in a tubular shape and inside of which the speed reducing mechanism is disposed; and a motor flange to which the electric motor can be attached with the first seal member sandwiched therebetween, and that is attached to the case main body so as to cover an opening portion disposed so as to face upward in the case main body, a second seal member for sealing the lubricant oil in the case is disposed between the case main body and the motor flange, and the wall portion is formed at the motor flange as a tubular portion inside of which the output shaft of the electric motor can be disposed.

According to this aspect of the invention, from the viewpoint of ease and efficiency of production, the case is made up of the tubular case main body and the motor flange that covers the opening portion of the case main body via the second seal member and to which the electric motor can be attached. Note that the breakage of the second seal member serving as a seal element is also prevented by the operation of the relief valve as with the first seal member and the seal unit described above. Also, the portion, inside of which the output shaft of the electric motor is disposed, of the motor flange is formed as a tubular portion, thus causing that portion to perform the function of the wall portion that suppresses the lubricant oil that has scattered due to the stirring at the center portion of the case from reaching the opening of the relief valve. This makes it possible to effectively utilize the motor flange to efficiently form the wall portion.

According to a yaw driving device for a wind turbine according to a third aspect of the present invention, in the yaw driving device for a wind turbine of the second aspect of the invention, the relief valve is disposed such that an upper end portion thereof is located above the motor flange and below a head portion of an attachment bolt for attachment of the electric motor to the motor flange.

According to this aspect of the invention, the relief valve is disposed such that its upper end portion is located below the head portion of the attachment bolt for attachment of the electric motor. Accordingly, the relief valve does not obstruct the operation of attaching the electric motor to the motor flange of the yaw driving device for a wind turbine provided with the relief valve, and therefore it is possible to prevent the operability from being compromised. Also, the relief valve is disposed such that its upper end portion is located above the motor flange. Accordingly, in the range in which the operability of the attachment operation of the electric motor is not compromised as described above, a sufficient length can be secured for the communication path extending vertically in the relief valve. Therefore, even if a slight amount of the lubricant oil that was not blocked by the wall portion and the shoulder portion reaches the opening into the case of the relief valve, the lubricant oil drops down along the communication path for which a sufficient length in the up-down direction is secured. This makes it possible to efficiently prevent the lubricant oil from reaching the opening of the relief valve to the outside, thus further suppressing the leakage of the lubricant oil to the outside while the communication path is open.

A yaw driving device for a wind turbine according to a fourth aspect of the present invention is the yaw driving device for a wind turbine of any one of the first to third aspects of the invention, further including a suction valve that is fixed to the relief valve and can suck outside air into the case, wherein the suction valve includes a suction communication path in communication with the communication path and with the outside, and a suction valve body that opens an opening facing downward on a side of the suction communication path that is opposite to a side in communication with the communication path, in response to a decrease in the pressure of the gas in the case and closes the aforementioned opening in response to an increase in the aforementioned pressure.

According to this aspect of the invention, the suction valve including the suction communication path that is in communication with the communication path is further provided. After the high-pressure gas in the case is released to the outside by the operation of the relief valve and the communication path is returned to the closed state, the suction valve is operated such that the suction valve body opens the suction communication path when the pressure of the gas in the case reaches a negative pressure below a predetermined pressure. Accordingly, the outside gas is sucked in via the suction valve and the relief valve. This enables the pressure of the gas in the case to be automatically returned to a predetermined pressure when the pressure of the gas in the case becomes a negative pressure, thus maintaining the inside of the case in the state of a stable pressure. When the pressure of the gas in the case is returned from the state of a negative pressure to the state of a predetermined pressure, the suction valve is operated such that the suction valve body closes the suction communication path again. Accordingly, the suction communication path is opened only when the pressure of the gas in the case becomes a negative pressure below a predetermined pressure, and the suction communication path is maintained in the closed state in other states. This can suppress the entry of foreign substances into the case. Further, the suction valve is provided so as to be fixed to the relief valve, and therefore can be formed compactly such that it is integrated with the relief valve. Since the relief valve and the suction valve can be attached to the case at the same time, it is also possible to reduce the number of steps for attachment.

### Effects of Invention

According to the present invention, it is possible to provide a yaw driving device for a wind turbine that can automatically reduce the pressure of the gas in the case without a manual operation at the occurrence of an increase in the pressure of the gas in the case, thus preventing the breakage of the seal elements, suppressing the leakage of the lubricant oil in the case and the entry of foreign substances into the case, and preventing an increase in the size of the mechanism.

### Brief Description of the Drawings

[FIG. 1] FIG. 1 is a perspective view showing a wind turbine to which a yaw driving device for a wind turbine according to one embodiment of the present invention is applied.
[FIG. 2] FIG. 2 is an enlarged cross-sectional view showing the portion of the wind turbine shown in FIG. 1 where a nacelle is attached to a tower.
[FIG. 3] FIG. 3 is a front view showing a yaw driving device for a wind turbine according to one embodiment of the present invention.
[FIG. 4] FIG. 4 is a plan view of the yaw driving device for a wind turbine shown in FIG. 3.
[FIG. 5] FIG. 5 is a cross-sectional view taken along the arrows A-Ain FIG. 4.
[FIG. 6] FIG. 6 is an enlarged cross-sectional view showing part of FIG. 5 in enlargement.
[FIG. 7] FIG. 7 is a front view of a relief valve of the yaw driving device for a wind turbine shown in FIG. 3, partially shown in a cutaway cross section.
[FIG. 8] FIG. 8 is a front view showing a relief valve and a suction valve according to a modification, partially shown in a cutaway cross section.

### Description of Embodiments

Hereinafter, an embodiment of the present invention will be described with reference to the drawings. The embodiment of the present invention is widely applicable to a yaw driving device for a wind turbine for provision in a wind turbine and for use as a driving device for turning a nacelle of the wind turbine.

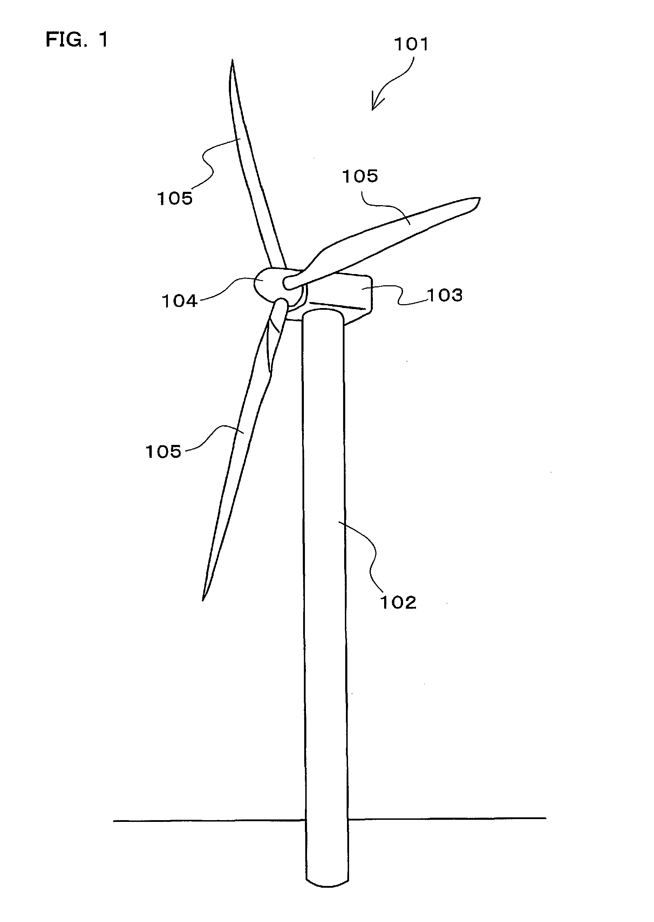

FIG. 1 is a perspective view showing a wind turbine 101 to which a yaw driving device 1 for a wind turbine (a wind turbine yaw driving device 1) according to one embodiment of the present invention is applied. As shown in FIG. 1, the wind turbine 101 includes a tower 102, a nacelle 103, a rotor hub 104, and blades 105, for example. The tower 102 is installed extending vertically upward from the ground, and the nacelle 103 is rotatably supported on the tower 102. Also, the nacelle 103 is installed so as to be turned around in a horizontal plane by the wind turbine yaw driving device 1, which will be described later, and a power transmission shaft, an electricity generator, and so forth, which are not shown, are disposed inside the nacelle 103. The rotor hub 104 is coupled to the aforementioned power transmission shaft and is rotatably provided on the nacelle 103. A plurality of (in this embodiment, three) blades 105 are attached to the rotor hub 104, extending radially at equal angle intervals.

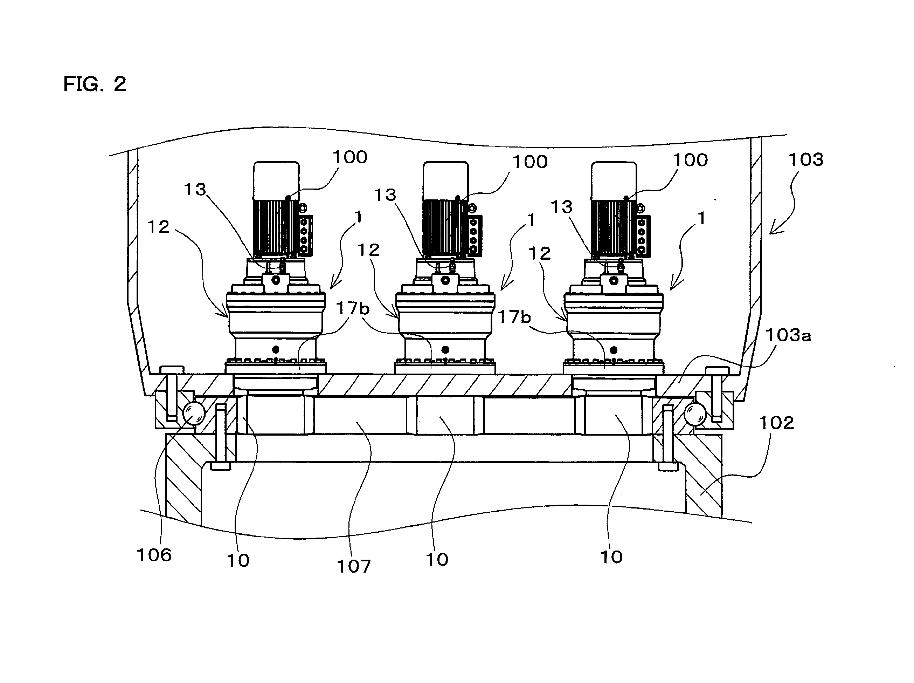

FIG. 2 shows an enlarged cross-sectional view showing the portion where the nacelle 103 is attached to the tower 102, together with the wind turbine yaw driving devices 1 and electric motors 100 for driving the yaw driving devices 1. The nacelle 103 is rotatably supported, at its bottom portion 103a, on the top portion of the tower 102 via a bearing 106. A ring gear 107, which is a gear having internal teeth formed on its inner circumference, is fixed to the top portion of the tower 102 (in FIG. 2, the internal teeth of the ring gear 107 are not shown). In the nacelle 103, the wind turbine yaw driving devices 1 coupled to the electric motors 100 for inputting a rotational driving force are attached to the bottom portion 103a. Each of the wind turbine yaw driving devices 1 is disposed such that the output pinion 10 projects downward from a hole formed in the bottom portion 103a of the nacelle 103 and meshes with the ring gear 107. Also, the wind turbine yaw driving devices 1 are disposed in plurality of locations (for example, four locations) in the inner circumferential direction of the ring gear 107. Note that the ring gear 107 having internal teeth formed on its inner circumference is shown as an example of the gear fixed to the top portion of the tower 102 in this embodiment, this need not be the case. That is, the gear fixed to the top portion of the tower 102 may be provided as a ring gear having external teeth formed on its outer circumference, and the pinions 10 may be disposed so as to mesh with the external teeth of the ring gear.

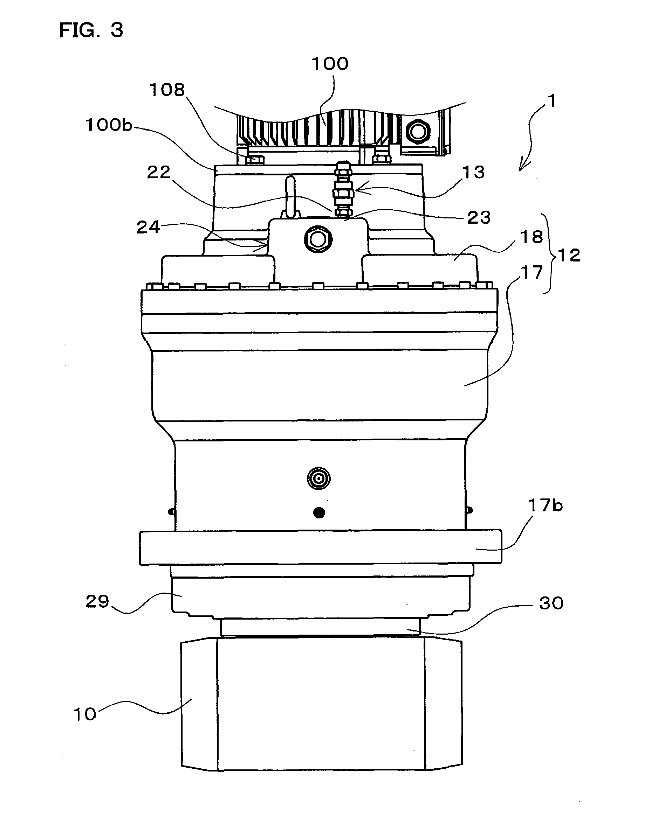

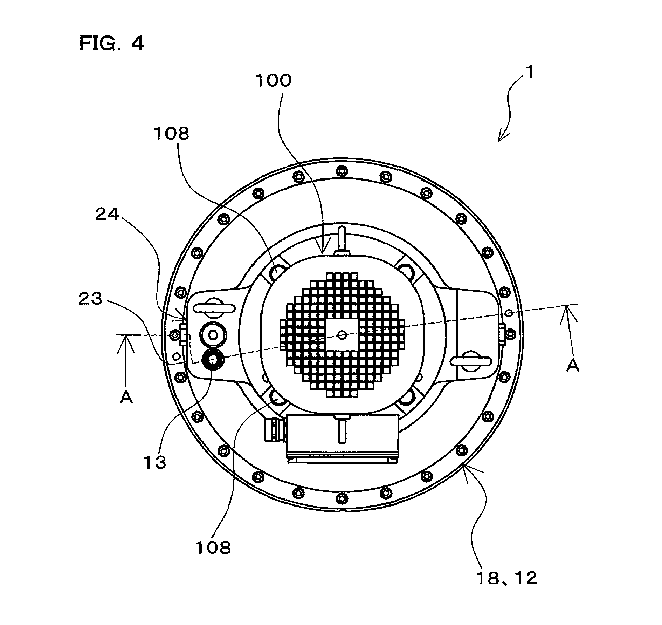

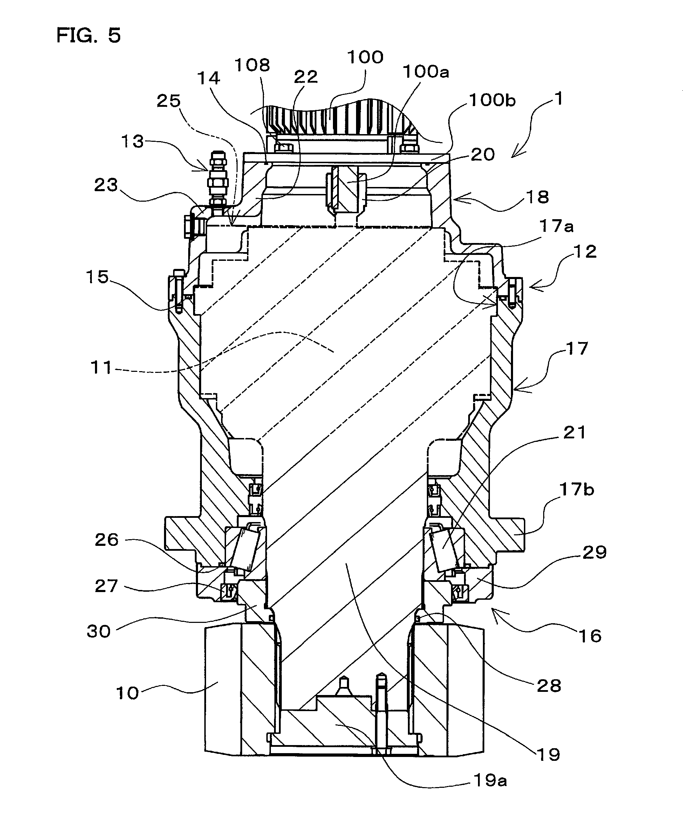

Next, the wind turbine yaw driving device 1 according to one embodiment of the present invention will be described in detail. FIG. 3 is a front view showing the wind turbine yaw driving device 1 according to this embodiment, and FIG. 4 is a plan view showing the wind turbine yaw driving device 1. FIG. 5 is a cross-sectional view taken along the arrows A-Ain FIG. 4. The wind turbine yaw driving device 1 shown in FIGS. 2 to 5 is disposed at the bottom portion 103a of the nacelle 103 as described above, and is used as a driving device for turning the nacelle 103 relative to the tower 102. The wind turbine yaw driving device 1 includes, for example, a speed reducing mechanism 11, a case 12, a relief valve 13, a first seal member 14, a second seal member 15, and a seal unit 16.

Each of the wind turbine yaw driving devices 1 is attached to the nacelle 103 in an orientation in which the pinion 10, which is provided in an output shaft 19 described below that is located projecting from the case 12, is disposed below and the end portion of the case 12 on the side on which the electric motor 100 is attached is disposed above. Note that FIGS. 2 and 3 schematically show the pinions 10. Also, the wind turbine yaw driving devices 1 turns the nacelle 103 by outputting, to the pinions 10, the rotational driving force that has been input from the electric motors 100 disposed on the upper side and rotating the pinions 10 meshing with the ring gear 107. Note that in the following description, the up-down direction is defined based on the orientation in which the wind turbine yaw driving devices 1 are disposed in the nacelle 103. That is, the description is given, taking the output side of the wind turbine yaw driving devices 1, which is the side on which the pinions 10 are disposed, as the lower end side, and the input side thereof, which is the side on which the electric motors 100 are attached, as the upper end side.

The speed reducing mechanism 11 shown in FIG. 5 is configured to reduce and transmit a rotational driving force that is input from the electric motor 100, and output the rotational driving force from the output shaft 19 provided with the pinion 10. Note that the pinion 10 is attached to the output shaft 19 via a spline coupling and is fixed to the output shaft 19 with a presser member 19a. The speed reducing mechanism 11 includes, for example, a spur gear speed reducer including a spur gear, a planet gear speed reducer including a sun gear, a planet gear, and a planet carrier, an eccentric speed reducer including a crankshaft, an external gear, and a carrier, or a speed reducer formed by any combination of these speed reducers. In FIG. 5, the portions other than the output shaft 19 are indicated by the dashed line, and a detailed illustration thereof is omitted

The speed reducing mechanism 11 may be configured, for example, as a mechanism including, for example, an input shaft 20 for being coupled to an output shaft 100a of the electric motor 100, a planet gear mechanism for being coupled to the input shaft 20, a spur gear for being coupled to the planet gear mechanism, an eccentric speed reducer for being coupled to the spur gear, and the output shaft 19 for being coupled to the eccentric speed reducer. The above-described eccentric speed reducer may be configured as a speed reducer including, for example, an external gear for meshing with the internal teeth disposed on the inner circumference of a case main body 17, which will be described below, of the case 12, a crankshaft to which the spur gear is fixed at its end portion and that causes the external gear to rotate eccentrically, and a carrier that rotatably holds the crankshaft and to which the output shaft 19 is fixed.

The case 12 shown in FIGS. 2 to 5 includes the case main body 17 and a motor flange 18. The electric motor 100 is attached to the case 12, and the speed reducing mechanism 11 is disposed inside the case 12. The interior of the case 12 is sealed from the outside with the first seal member 14, the second seal member 15, the seal unit 16, and the like, which will be described later, and the sealed inside of the case 12 is filled with a lubricant oil. Note that the oil level 25 of the lubricant oil in the case 12 is indicated by the two-dot chain line in FIG. 5.

The case main body 17 is formed in a tubular shape whose opposite end portions in the up-down direction are open. Also, an upper end-side opening portion 17a that is disposed facing upward in the case main body 17 is covered by the motor flange 18. On the other hand, the output shaft 19 projects from a lower end-side opening portion facing downward in the case main body 17. The speed reducing mechanism 11 is disposed inside the case main body 17. Note that the case main body 17 is formed such that the external shape of its cross section perpendicular to the axial direction of the case 12 disposed in the up-down direction (that is, the direction parallel to the direction of the rotation centerline of the wind turbine yaw driving device 1) is circular. A bearing 21 is fitted into the inner circumference of the lower end-side end portion of the case main body 17, and the output shaft 19 is rotatably held on the case main body 17 via the bearing 21. A hub 17b for attachment to the bottom portion 103a of the nacelle 103 is formed around the entire outer circumference on the lower end side of the case main body 17.

The motor flange 18 is formed as a lid-like member that is attached to the case main body 17 so as to cover the upper end-side opening portion 17a of the case main body 17, and is provided as a tubular body that is formed such that its external shape has a portion whose diameter is reduced in a step form toward the upper end side. The output shaft 100a and the input shaft 20 of the motor 100 are disposed inside the motor flange 18. The lower end-side end portion of the motor flange 18 is fixed to the upper end-side end portion of the case main body 17 with bolts. On the other hand, on the upper end side of the motor flange 18, the electric motor 100, which is disposed above the case 12, is attached with the first seal member 14, which will be described below, sandwiched therebetween. Note that the electric motor 100 is fixed to the motor flange 18 with a plurality of attachment bolts 108 via an attachment plate 100b provided at the lower end portion of the electric motor 100.

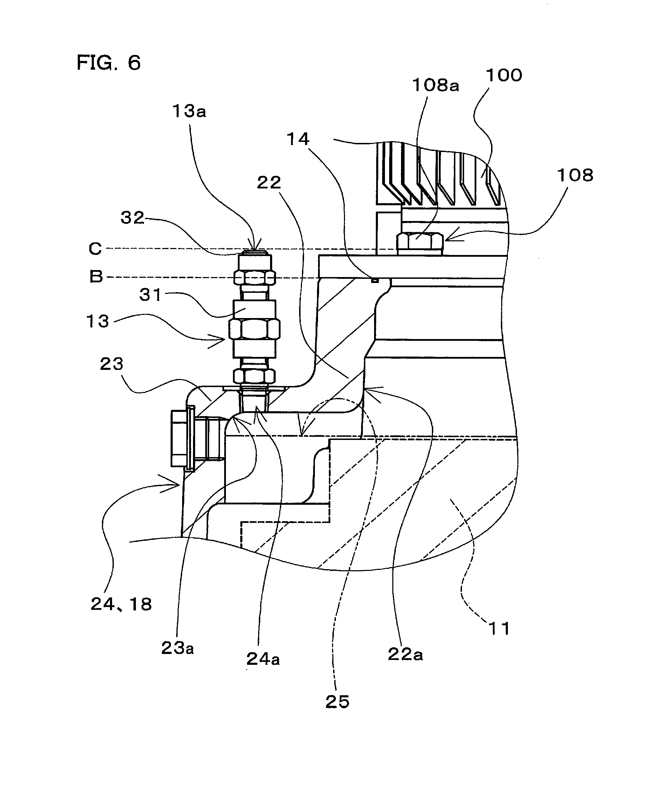

FIG. 6 is an enlarged cross-sectional view showing a part of FIG. 5 in enlargement. As shown in FIGS. 3 to 6, a wall portion 22 and a shoulder portion 23 are formed at the motor flange 18, which constitutes the upper end-side portion of the case 12. The wall portion 22 is formed as a tubular portion inside of which the output shaft 100a of the electric motor 100 is disposed, and is disposed in the circumferential direction about the direction of the rotation centerline of the wind turbine yaw driving device 1.

The motor flange 18 is provided with a side bulged portion 24 that is formed, in a portion of the wall portion 22 in the circumferential direction, so as to extend laterally outward in the radial direction of the case 12 (the direction perpendicular to the direction of the rotation centerline of the wind turbine yaw driving device 1) and so as to bulge such that it rises upward in a box shape. Also, the shoulder portion 23 is formed in the side bulged portion 24. The shoulder portion 23 is formed as a portion that is formed extending inward in a bending manner in the radial direction of the case 12 at an upper end portion of the side bulged portion 24, which projects upward to the middle of the height of the wall portion 22. The shoulder portion 23 is disposed above the oil level 25 of the lubricant oil in the case 12. The inner wall surface of the shoulder portion 23 is formed as a curved surface 23a that is curved so as to be bent about 90° relative to the up-down direction. Note that the wall portion 22 described above constitutes a wall portion of this embodiment that is disposed inside of the shoulder portion 23 in the radial direction of the case 12 and that extends in the up-down direction. Also, the wall surface provided inside the wall portion 22 in the circumferential direction is formed as an inner circumferential face 22a extending substantially straight in the up-down direction.

The first seal member 14 shown in FIGS. 5 and 6 is provided as an O-ring seal member having a substantially circular cross section or a substantially elliptical cross section that is formed in a ring shape extending in the circumferential direction of the upper end-side end portion of the case 12. Also, the first seal member 14 is disposed between the attachment plate 100b of the electric motor 108 and the motor flange 18 of the case 12 in a state of being fixed in contact with these components. Thereby, the lubricant oil in the case 12 is sealed.

The second seal member 15 shown in FIG. 5 is provided as an 0-ring seal member having a substantially circular cross section or a substantially elliptical cross section that is formed in a ring shape extending in the circumferential direction of the upper end portion of the case main body 17. Also, the second seal member 15 is disposed between the upper end portion of the case main body 17 and the lower end portion of the motor flange 18 in a state in which it is in contact with and fixed to these components. Thereby, the lubricant oil in the case 12 is sealed. Note that the second seal member 15 and the first seal member 14 described above constitute seal elements of this embodiment that serve as component members for sealing the lubricant oil in the case 12.

The seal unit 16 shown in FIG. 5 is disposed between the case 12 and the output shaft 19. In this embodiment, the seal unit 16 includes a third seal member 26, a fourth seal member 27, and a fifth seal member 28 serving as seal elements, a seal housing 29, and a bearing holding member 30. The seal unit 16 is configured to seal the lubricant oil in the case 12 by including the above-described seal elements (26, 27,28).

The bearing holding member 30 is formed in a ring shape, and is disposed on the lower end side of the bearing 21. Also, the bearing holding member 30 is attached to the outer circumference of the output shaft 19, supports the lower end side of the bearing 21 whose upper end side is supported on the case main body 17, and holds the fifth seal member 28 on its lower end-side inner circumference. Note that bearing holding member 30 is attached to the output shaft 19, for example, by screwing. The fifth seal member 28 is provided as an O-ring seal member having a substantially circular cross section or a substantially elliptical cross section that is formed in a ring shape extending along the outer circumference of the output shaft 19, is held in close contact on the inner circumference of the bearing holding member 30, and is disposed against the outer circumference of the output shaft 19. Thereby, the fifth seal member 28 seals the lubricant oil in the case 12 between the bearing holding member 30 and the output shaft 19.

The fourth seal member 27 is formed in a ring shape, and is disposed such that a lip portion provided on its inner circumference is in sliding contact with the outer circumference of the bearing holding member 30. The seal housing 29 is formed as a ring-shaped member, is attached to the lower end portion of the case 12 with bolts (not shown), and is configured to hold the fourth seal member 27. Note that the fourth seal member 27 is held on the seal housing 29, with its outer circumference in close contact with the inner circumference of the seal housing 29. Thereby, the fourth seal member 27 seals the lubricant oil in the case 12 between the seal housing 29 and the bearing holding member 30.

The third seal member 26 is provided as an O-ring seal member having a substantially circular cross section or a substantially elliptical cross section that is formed in a ring shape extending in the circumferential direction of the lower end portion of the case main body 17. Also, the third seal member 26 is disposed between the lower end portion of the case main body 17 and the upper end portion of the seal housing 29 in a state in which it is in contact with and fixed to these components. Thereby, the lubricant oil in the case 12 is sealed.

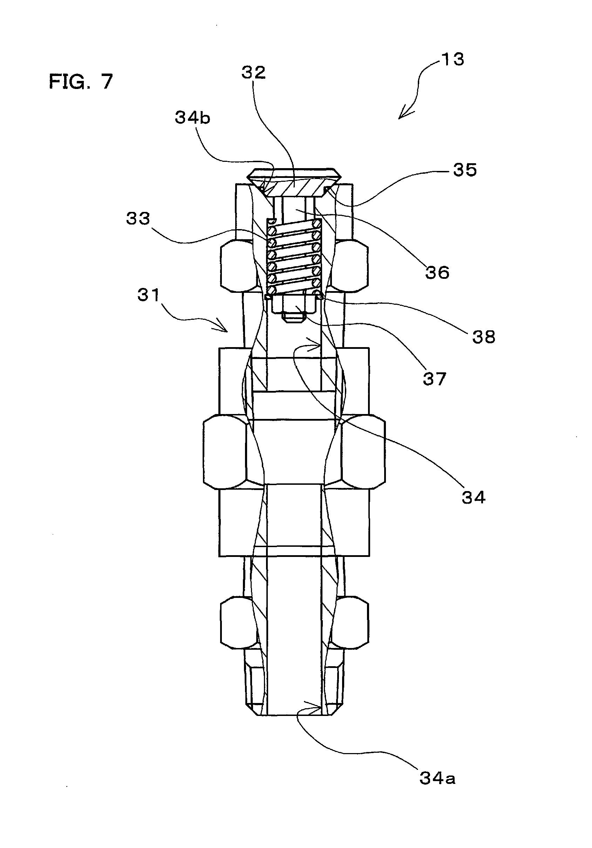

FIG. 7 is a front view of the relief valve 13, partially shown in a cutaway cross section. The relief valve 13 shown in FIGS. 2 to 7 is provided on the upper end side of the case 12, and includes, for example, a valve main body 31, a valve body 32, a spring 33, and a communication path 34 that is formed in the valve main body 31. The relief valve 13 is attached so as to be disposed projecting upward relative to the motor flange 18 of the case 12. As clearly shown in FIG. 6, the relief valve 13 is disposed such that its upper end portion 13a is located above the height position (indicated by the dashed line B in the drawing) of the upper end portion of the motor flange 18. Further, the relief valve 13 is disposed such that its upper end portion 13a is located below the height position (indicated by the dashed line C in the drawing) of the lower end portion of a head portion 108a of an attachment bolt 108 for attachment of the electric motor 100 to the motor flange 18.

As clearly shown in FIGS. 6 and 7, the valve main body 31 is formed by combining a tubular member, a joint member, a fastening member, and the like in series and coupling these members together, and is attached to the motor flange 18 in an orientation in which its longitudinal direction extends in the up-down direction. Provided on the outer circumference of the lower end portion of the valve main body 31 is an external thread portion, which is configured to be screwed to an internal thread portion that is provided on the inner circumference of a through-hole 24a penetrating the upper end portion of the side bulged portion 24 of the motor flange 18. Also, a hole penetrating in the up-down direction is provided in the valve main body 31, and this hole constitutes the communication path 34 that is in communication with the inside of the case 12. Note that the relief valve 13 is disposed such that an opening 34a into the case 12 at the lower end portion of the communication path 34 is located at a position of the case 12 that is inside of the shoulder portion 23 in the radial direction of the case 12 and outside of the wall portion 22 in the radial direction of the case 12.

The valve body 32 shown in FIGS. 6 and 7 is provided as a member that opens the opening 34b of the communication path 34 to the outside, located on the upper end side of the communication path 34, in response to an increase in the pressure of a gas (for example, air) in the case 12, and that closes the opening 34b in response to a decrease in the pressure of the gas in the case 12. Note that the opening 34b constitutes a valve seat on and from which the valve body 32 is seated and unseated, and an O-ring seal member 35 is fitted into a location of the valve body 32 that is in contact with the opening 34b. Also, the valve body 32 is provided with a valve stem 36 formed so as to project from its central part on the underside to the inside of the communication path 34.

The spring 33 is provided as a coil spring, and is disposed on the upper end side of the communication path 34, with the valve stem 36 penetrating therethrough. Also, the spring 33 is disposed with its upper end portion being locked against a stepped portion that is formed such that its diameter is reduced toward the upper side in the communication path 34. On the other hand, the lower end portion of the spring 33 is disposed so as to be in contact with a nut member 37 that is screwed to the lower end side of the valve stem 36 and also to be locked against a retaining ring member 38 configured, for example, as a snap ring that is disposed around the nut member 37 and is fitted into a groove on the inner circumference of the communication path 34. Also, the spring 33 is disposed in the compressed state inside the communication path 34, and biases the valve body 32, with an elastic force generated between the stepped portion of the communication path 34 and the nut member 37, via the valve stem 36 downward, which is the direction in which the valve body 32 is seated on the opening 34b.

Next, the operation of the wind turbine yaw driving devices 1 described above will be described. The wind turbine yaw driving devices 1 are operated by operating the electric motors 100. Upon start of operation of the electric motors 100, a rotational driving force is input to the speed reducing mechanisms 11 from the output shafts 100a of the electric motors 100. This rotational driving force is reduced and transmitted by the speed reducing mechanisms 11, and is output from the output shafts 19. Then, with the rotation of the output shafts 19, a large torque is output from the pinions 10 meshing with the ring gear 107. Consequently, with the rotation of the pinions 10, the nacelle 103 is turned relative to the tower 102, together with the wind turbine yaw driving devices 1, which are fixed to the bottom portion 103a of the nacelle 103 in the case 12.

Each of he wind turbine yaw driving devices 1 is provided with the relief valve 13 as described above. Therefore, when the pressure of the gas in the case 12 is increased to exceed a predetermined pressure, the gas pressure exerted on the valve body 32 causes the valve body 32 to be pushed up against the biasing force of the spring 33. Consequently, the valve body 32 is unseated from the opening 34b, thus opening the opening 34b to release (discharge) the high-pressure gas in the case 12 to the outside. On the other hand, when the pressure of the gas in the case 12 is decreased due to partial release of the high-pressure gas, the biasing force of the spring 33 causes the valve body 32 to be pushed down via the nut member 37 and the valve stem 36. Consequently, the valve body 32 is seated on the opening 34b, thus closing the opening 34b.

With the wind turbine yaw driving device 1 described thus far, when the pressure of the gas in the case 12 is increased due to the influence of frictional heat generated during operation of the speed reducing mechanism 11 or the influence of the temperature outside the case 12, the relief valve 13 is operated such that the valve body 32 opens the communication path 34. Accordingly, the high-pressure gas in the case 12 is released through the relief valve 13 to the outside. This enables the pressure of the gas in the case 12 to be automatically decreased without a manual operation at the occurrence of an increase in the pressure of the gas in the case 12. Also, it is possible to prevent the breakage of the first to fifth seal members (14, 15, 26, 27, 28) serving as the seal elements for sealing the lubricant oil in the case 12. Further, when the pressure of the gas in the case 12 is decreased due to partial release of the high-pressure gas, the relief valve 13 is operated such that the valve body 32 closes the communication path 34 again. Accordingly, the communication path 34 is opened only when the pressure of the gas in the case 12 becomes high, and the communication path 34 is maintained in the closed state when the pressure of the gas in the case 12 is a pressure that could not possibly cause the breakage of the seal elements. This can suppress the entry of foreign substances into the case 12.

With the wind turbine yaw driving device 1, the relief valve 13 is provided projecting upward at the upper end portion of the case 12, and is disposed at a position spaced above the oil level 25 of the lubricant oil in the case 12. Also, the relief valve 13 is disposed such that the opening 34a of the communication path 34 of the relief valve 13 into the case 12 is located inside of the shoulder portion 23 bent in a step form and outside of the wall portion 22 extending in the up-down direction in the case 12. Accordingly, the lubricant oil that has been scattered due to the stirring of the lubricant oil that occurs in the center portion of the case 12 with the rotation of the speed reducing mechanism 11 in the case 12 collides with the inner circumferential face 22a of the wall portion 22, and drops down along the inner circumferential face 22. This makes it possible to efficiently prevent the lubricant oil that has been scattered due to the stirring at the center portion of the case 12 from reaching the opening 34a of the relief valve 13 into the case 12, thus suppressing the leakage of the lubricant oil to the outside while the communication path 34 is open.

Further, the lubricant oil that rises along the inner wall of the case 12 with the rotation of the speed reducing mechanism 11 in the case 12 collides with the curved surface 23a of the shoulder portion 23 that is disposed above the oil level 25 of the lubricant oil in the case 12 and drops down. This makes it possible to efficiently prevent the lubricant oil that rises along the inner wall of the case 12 from reaching the opening 34a of the relief valve 13 into the case 12, thus suppressing the leakage of the lubricant oil to the outside while the communication path 34 is open. Accordingly, it is possible to suppress the leakage of the lubricant oil in the case 12 to the outside. Also, the relief valve 13 is provided as a small structure including the communication path 34 and the valve body 32, and is disposed compactly so as to project upward on the upper end side of the case 12 on which the electric motor 100 is attached. Accordingly, it is also possible to suppress an increase in the size of the mechanism of the wind turbine yaw driving device 1 provided with the relief valve 13.

Therefore, according to this embodiment, it is possible to provide a yaw driving device 1 for a wind turbine that can automatically reduce the pressure of the gas in the case 12 without a manual operation at the occurrence of an increase in the pressure of the gas in the case 12, thus preventing the breakage of the seal elements (14, 15, 26 to 28), suppressing the leakage of the lubricant oil in the case 12 to the outside and the entry of foreign substances into the case 12 from the outside, and preventing an increase in the size of the mechanism.

With the wind turbine yaw driving device 1, from the viewpoint of ease and efficiency of production, the case 12 is made up of the tubular case main body 17 and the motor flange 18 that covers the opening portion 17a of the case main body 17 via the second seal member 15 and to which the electric motor 100 can be attached. Also, the portion, inside of which the output shaft 100a of the electric motor 100 is disposed, of the motor flange 18 is formed as a tubular portion, thus causing that portion to perform the function of the wall portion 22 that suppresses the lubricant oil that has scattered due to the stirring at the center portion of the case 12 from reaching the opening 34a of the relief valve 13. This makes it possible to effectively utilize the motor flange 18 to efficiently form the wall portion.

With the wind turbine yaw driving device 1, the relief valve 13 is disposed such that its upper end portion 13a is located below the head portion 108a of the attachment bolt 108 for attachment of the electric motor 100. Accordingly, the relief valve 13 does not obstruct the operation of attaching the electric motor 100 to the motor flange 18 of the wind turbine yaw driving device 1 provided with the relief valve 13, and therefore it is possible to prevent the operability from being compromised. Also, the relief valve 13 is disposed such that its upper end portion 13a is located above the motor flange 18. Accordingly, in the range in which the operability of the attachment operation of the electric motor 100 is not compromised as described above, a sufficient length can be secured for the communication path 34 extending vertically in the relief valve 13. Therefore, even if a slight amount of the lubricant oil that was not blocked by the wall portion 22 and the shoulder portion 23 reaches the opening 34a into the case 12 of the relief valve 13, the lubricant oil drops down along the communication path 34 for which a sufficient length in the up-down direction is secured. This makes it possible to efficiently prevent the lubricant oil from reaching the opening 34b of the relief valve 13 to the outside, thus further suppressing the leakage of the lubricant oil to the outside while the communication path 34 is open.

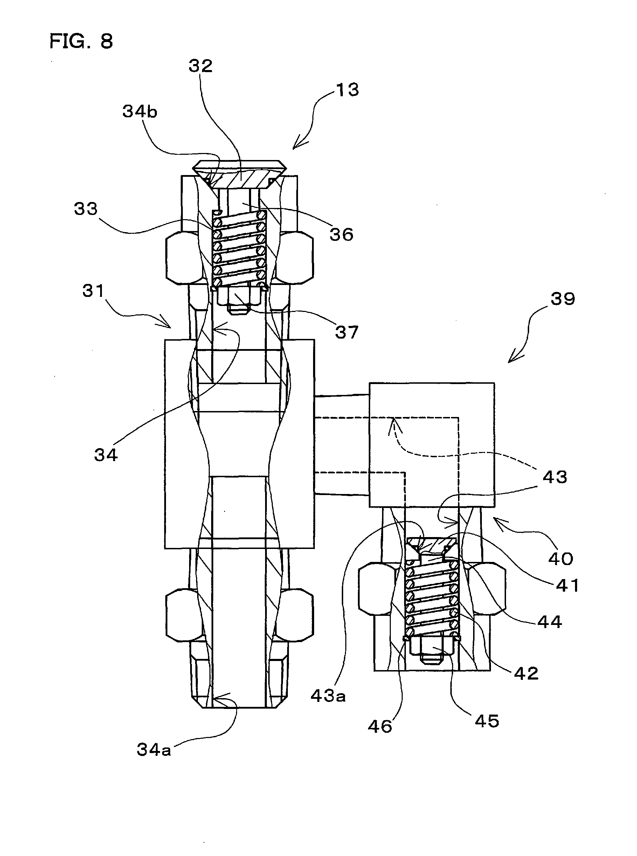

Although an embodiment of the present invention has been described thus far, the present invention is not limited to the above-described embodiment, and various modifications may be made in the scope recited in the claims. For example, the following modifications are possible.
(1) Although this embodiment has been described, taking, as an example, a configuration in which the shoulder portion is provided at the side bulged portion of the motor flange, the present invention is not limited to this example. It is possible to adopt a configuration in which the shoulder portion is formed at a portion of the motor flange other than the side bulged portion. It is also possible to adopt a configuration in which the shoulder portion is formed at the case main body.
(2) Although this embodiment has been described, taking, as an example, a configuration in which the wall portion is provided at the tubular portion, inside of which the output shaft of the electric motor is disposed, of the motor flange, the present invention is not limited to this example. It is possible to adopt a configuration in which the wall portion is formed at a portion of the motor flange other than the tubular portion.
(3) The position where the relief valve is attached to the case is not limited to the position described in this embodiment, and may be various positions as long as the opening of the communication path into the case is located inside of the shoulder portion and outside of the wall portion.
(4) It is possible to implement a yaw driving device for a wind turbine that further includes a suction valve that is fixed to the relief valve and that can suck outside air into the case, in addition to the relief valve. FIG. 8 is a front view showing the relief valve 13 and a suction valve 39 that is fixed to the relief valve 13, partially shown in a cutaway cross section. It is also possible to attach, to the wind turbine yaw driving device 1, the relief valve 13 and the suction valve 39 that are provided integrally as shown in FIG. 8, in place of the relief valve 13 that is attached singly as shown in FIG. 7. Note that in FIG. 8, the elements relating to the relief valve 13 that are configured in the same manner as in this embodiment are denoted by the same reference numerals as in this embodiment and the description thereof is omitted. Only the configuration of the suction valve 39 will be described.

The suction valve 39 shown in FIG. 8 is fixed to the relief valve 13, and includes, for example, a suction valve main body 40, a suction valve body 41, a spring 42, and a suction communication path 43 formed in the suction valve main body 40. The suction valve 39 is configured such that it projects laterally relative to the relief valve 13 and then extends downward via an elbow portion that is bent at about 90°.

The suction valve main body 40 is formed by combining a tubular member, a joint member, and a fastening member and coupling these members together. The suction valve main body 40 is provided with a hole penetrating therethrough in the longitudinal direction extending in a bending manner, and this hole constitutes a suction communication path 43 that is in communication with the communication path 34 of the relief valve 13 and with the outside. The suction valve body 41 is provided as a member that opens an opening 43a facing downward on the side of the suction communication path 43 that is opposite to the side that is in communication with the communication path 34, in response to a decrease in the pressure of the gas in the case 12, and that closes the opening 43a in response to an increase in the pressure of the gas in the case 12. Note that the opening 43a constitutes a valve seat on and from which the suction valve body 41 is seated and unseated, and is formed as a portion whose diameter is reduced in the middle of the communication path 43 toward the inside. An O-ring seal member is fitted into a location of the suction valve body 41 that is in contact with the opening 43a, and the suction valve body 41 is provided with a valve stem 44 that is formed so as to project downward from its central part on the underside. The communication path 43 is formed extending further downward below the opening 43a, and is open to the outside at its lower end portion.

The spring 42 is provided as a coil spring, and is disposed below the opening 43a of the suction communication path 43, with the valve stem 44 penetrating therethrough. Also, the spring 42 is disposed with its upper end portion being locked against a stepped portion that is formed such that its diameter is increased in a step form below the opening 43a. On the other hand, the lower end portion of the spring 42 is disposed so as to be in contact with a nut member 45 that is screwed onto the lower end side of the valve stem 44 and also to be locked against a retaining ring member 46 configured, for example, as a snap ring that is disposed around the nut member 45 and is fitted into a groove on the inner circumference of the communication path 43. Also, the spring 42 is disposed in the compressed state inside the communication path 43, and biases the suction valve body 41, with an elastic force generated between the stepped portion below the opening 43a and the nut member 45, via the valve stem 36 downward, which is the direction in which the suction valve body 41 is seated on the opening 43a.

The suction valve 39 having the above-described configuration is further provided. Therefore, when the pressure of the gas in the case 12 is decreased to a negative pressure below a predetermined pressure, the pressure (atmospheric pressure) of the outside air exerted on the suction valve body 41 causes the suction valve body 41 to be pushed up against the biasing force of the spring 42. Consequently, the suction valve body 41 is unseated from the opening 43a, thus opening the opening 43a to cause the outside air to flow into the case 12 through the suction communication path 43 and the communication path 34. On the other hand, when the pressure of the gas in the case 12 is increased due to inflow of the outside air, the biasing force of the spring 42 causes the suction valve body 41 to be pushed down via the nut member 45 and the valve stem 44. Consequently, the suction valve body 41 is seated on the opening 43a, thus closing the opening 43a.

According to this modification, the suction valve 39 including the suction communication path 43 that is in communication with the communication path 34 is further provided. After the high-pressure gas in the case 12 is released to the outside by the operation of the relief valve 13 and the communication path 34 is returned to the closed state, the suction valve 39 is operated such that the suction valve body 41 opens the suction communication path 43 when the pressure of the gas in the case 12 reaches a negative pressure below a predetermined pressure. Accordingly, the outside gas is sucked in via the suction valve 39 and the relief valve 13. This enables the pressure of the gas in the case 12 to be automatically returned to a predetermined pressure when the pressure of the gas in the case 12 becomes a negative pressure, thus maintaining the inside of the case 12 in the state of a stable pressure. When the pressure of the gas in the case 12 is returned from the state of a negative pressure to the state of a predetermined pressure, the suction valve 39 is operated such that the suction valve body 41 closes the suction communication path 43 again. Accordingly, the suction communication path 43 is opened only when the pressure of the gas in the case 12 becomes a negative pressure below a predetermined pressure, and the suction communication path 43 is maintained in the closed state in other states. This can suppress the entry of foreign substances into the case 12. Further, the suction valve 39 is provided so as to be fixed to the relief valve 13, and therefore can be formed compactly such that it is integrated with the relief valve 13. Since the relief valve 13 and the suction valve 39 can be attached to the case 12 at the same time, it is also possible to reduce the number of steps for attachment.

### Industrial Applicability

The present invention is widely applicable as a yaw driving device for a wind turbine for provision in a wind turbine and for use as a driving device for turning a nacelle of the wind turbine.

### Reference Signs List

- 1: Yaw driving device for a wind turbine
- 10: Pinion
- 11: Speed reducing mechanism
- 12: Case
- 13: Relief valve
- 14: First seal member
- 16: Seal unit
- 19: Output shaft
- 22: Wall portion
- 23: Shoulder portion
- 25: Oil level
- 32: Valve body
- 34: Communication path
- 100: Electric motor
- 101: Wind turbine
- 102: Tower
- 103: Nacelle
- 107: Ring gear (Gear)

## Claims

1. A yaw driving device (1) for a wind turbine for provision in a wind turbine (101) and for use as a driving device for turning a nacelle (103) of the wind turbine (101), the device (1) comprising:
a speed reducing mechanism (11) that reduces and transmits a rotational driving force input from an electric motor (100), and outputs the rotational driving force from an output shaft (19) provided with a pinion (10) for meshing with a gear (107) fixed to a tower (102) of the wind turbine (101);
a case (12) to which the electric motor (100) can be attached and inside of which the speed reducing mechanism (11) is disposed;
a first seal member (14) that is disposed between the electric motor (101) and the case (12) for sealing a lubricant oil in the case (12);
a seal unit (16) that is disposed between the case (12) and the output shaft (19) for sealing the lubricant oil in the case (12); and
a relief valve (13) that includes a communication path (34) in communication with the case (12) and a valve body (32) that opens an opening (34b) of the communication path (34) to the outside, located on an upper end side of the communication path (34), in response to an increase in the pressure of the gas in the case (12) and closes said opening (34b) in response to a decrease in said pressure, and that is provided on an upper end side of the case (12) where the electric motor (100), which can be disposed above the case (12), can be attached,
wherein a shoulder portion (23) of the case (12) that is formed extending inward in a bending manner in a step form and that is disposed above the oil level (25) of the lubricant oil in the case (12), and a wall portion (22) of the case (12) that is disposed inside of the shoulder portion (23) in the radial direction of the case (12) and that extends in an up-down direction are formed at a portion on the upper end side of the case (12), and
the relief valve (13) is attached to the case (12) so as to be disposed projecting upward, and is disposed such that another opening (34a) of the communication path (34) into the case (12) is located inside, in the radial direction of the case (12), of the shoulder portion (23) and outside, in the radial direction of the case (12), of the wall portion (22) in the case (12).

2. The yaw driving device (1) for a wind turbine according to claim 1,
wherein the case (12) includes:
a case main body (17) that is formed in a tubular shape and inside of which the speed reducing mechanism (11) is disposed; and
a motor flange (18) to which the electric motor (100) can be attached with the first seal member (14) sandwiched therebetween, and that is attached to the case main body (17) so as to cover an opening portion disposed so as to face upward in the case main body (17),
a second seal member (15) for sealing the lubricant oil in the case (12) is disposed between the case main body (17) and the motor flange (18), and
the wall portion (22) is formed at the motor flange (18) as a tubular portion inside of which the output shaft (19) of the electric motor (100) can be disposed.

3. The yaw driving device (1) for a wind turbine according to claim 2,
wherein the relief valve (13) is disposed such that an upper end portion thereof is located above the motor flange (18) and below a head portion of an attachment bolt (108) for attachment of the electric motor (100) to the motor flange (18).

4. The yaw driving device (1) for a wind turbine according to any one of claims 1 to 3,
further comprising a suction valve (39) that is fixed to the relief valve (13) and can suck outside air into the case (12),
wherein the suction valve (39) includes a suction communication path (43) in communication with the communication path (34) and with the outside, and a suction valve body (41) that opens an opening (43a) facing downward on a side of the suction communication path (43) that is opposite to a side in communication with the communication path (34), in response to a decrease in the pressure of the gas in the case (12) and closes said opening (43a) in response to an increase in said pressure.

## Patentansprüche

1. Schwenkantriebsvorrichtung (1) für eine Windkraftturbine zur Bereitstellung in einer Windkraftturbine (101) und zur Verwendung als eine Antriebsvorrichtung zum Drehen einer Gondel (103) der Windkraftturbine (101), wobei die Vorrichtung (1) Folgendes umfasst:
- einen Drehzahlreduktionsmechanismus (11), der eine von einem Elektromotor (100) kommende Rotationsantriebskraft reduziert und überträgt und die Rotationsantriebskraft von einer Abtriebswelle (19) abgibt, die mit einem Ritzel (10) versehen ist, das mit einem Zahnrad (107) verzahnt ist, das an einem Mast (102) der Windkraftturbine (101) befestigt ist;
- ein Gehäuse (12), an dem der Elektromotor (100) angebracht werden kann und in dem der Drehzahlreduktionsmechanismus (11) angeordnet ist;
- ein erstes Dichtungselement (14), das zwischen dem Elektromotor (101) und dem Gehäuse (12) angeordnet ist, um ein Schmieröl in dem Gehäuse (12) abzudichten;
- eine Dichtungseinheit (16), die zwischen dem Gehäuse (12) und der Abtriebswelle (19) angeordnet ist, um das Schmieröl in dem Gehäuse (12) abzudichten; und
- ein Entlastungsventil (13), das einen Strömungspfad (34) umfasst, der mit dem Gehäuse (12) in Strömungsverbindung steht, und einen Ventilkörper (32) umfasst, der eine Öffnung (34b) des Strömungspfades (34), die auf einer Oberendseite des Strömungspfades (34) angeordnet ist, in Reaktion auf einen Anstieg des Drucks des Gases in dem Gehäuse (12) ins Freie öffnet und die Öffnung (34b) in Reaktion auf eine Verringerung dieses Drucks schließt, und die auf einer Oberendseite des Gehäuses (12) angeordnet ist, wo der Elektromotor (100), der über dem Gehäuse (12) angeordnet sein kann, angebracht werden kann,
wobei ein Schulterabschnitt (23) des Gehäuses (12), der so ausgebildet ist, dass er sich in einer gebogenen Weise in einer Stufenform einwärts erstreckt, und der über dem Ölstand (25) des Schmieröls in dem Gehäuse (12) angeordnet ist, und ein Wandabschnitt (22) des Gehäuses (12), der innerhalb des Schulterabschnitts (23) in der radialen Richtung des Gehäuses (12) angeordnet ist und der sich in einer Richtung von oben nach unten erstreckt, an einem Abschnitt auf der Oberendseite des Gehäuses (12) ausgebildet sind, und
wobei das Entlastungsventil (13) so an dem Gehäuses (12) angebracht ist, dass es nach oben weist, und so angeordnet ist, dass sich eine weitere Öffnung (34a) des Strömungspfades (34) in das Gehäuse (12) hinein im Inneren, in der radialen Richtung des Gehäuses (12), des Schulterabschnitts (23) und außerhalb, in der radialen Richtung des Gehäuses (12), des Wandabschnitts (22) in dem Gehäuse (12) befindet.

2. Schwenkantriebsvorrichtung (1) für eine Windkraftturbine nach Anspruch 1,
wobei das Gehäuse (12) Folgendes umfasst:
- einen Gehäusehauptkörper (17), der in einer Röhrenform ausgebildet ist und in dem der Drehzahlreduktionsmechanismus (11) angeordnet ist; und
- einen Motorflansch (18), an dem der Elektromotor (100) angebracht werden kann, wobei sich das erste Dichtungselement (14) dazwischen befindet, und der so an dem Gehäusehauptkörper (17) angebracht ist, dass er einen Öffnungsabschnitt bedeckt, der so angeordnet ist, dass er in dem Gehäusehauptkörper (17) nach oben weist,
wobei ein zweites Dichtungselement (15) zum Abzudichten des Schmieröls in dem Gehäuse (12) zwischen dem Gehäusehauptkörper (17) und dem Motorflansch (18) angeordnet ist, und
der Wandabschnitt (22) an dem Motorflansch (18) als ein röhrenförmiger Abschnitt ausgebildet ist, in dem die Abtriebswelle (19) des Elektromotors (100) angeordnet werden sein.

3. Schwenkantriebsvorrichtung (1) für eine Windkraftturbine nach Anspruch 2,
wobei das Entlastungsventil (13) so angeordnet ist, dass sich ein Oberendabschnitt davon über dem Motorflansch (18) und unter einem Kopfabschnitt eines Befestigungsbolzens (108) befindet, um den Elektromotor (100) an dem Motorflansch (18) zu befestigen.

4. Schwenkantriebsvorrichtung (1) für eine Windkraftturbine nach einem der Ansprüche 1 bis 3,
die des Weiteren ein Ansaugventil (39) umfasst, das an dem Entlastungsventil (13) befestigt ist und Luft von außen in das Gehäuse (12) saugen kann,
wobei das Ansaugventil (39) einen Ansaugströmungspfad (43) umfasst, der mit dem Strömungspfad (34) und mit der Außenumgebung in Strömungsverbindung steht, und einen Ansaugventilkörper (41) umfasst, der eine Öffnung (43a), die nach unten weist und sich auf einer Seite des Ansaugströmungspfades (43) befindet, die einer Seite gegenüberliegt, die mit dem Strömungspfad (34) in Strömungsverbindung steht, in Reaktion auf eine Verringerung des Drucks des Gases in dem Gehäuse (12) öffnet und die Öffnung (43a) in Reaktion auf einen Anstieg des Drucks schließt.

## Revendications

1. Dispositif d'orientation (1) pour éolienne, destiné à être installé dans une éolienne (101) et être utilisé en tant que système d'entraînement pour faire tourner une nacelle (103) de l'éolienne (101), le dispositif (1) comprenant .
- un mécanisme réducteur de vitesse (11) qui réduit et émet une entrée de force d'entraînement en rotation depuis un moteur électrique (100), et génère la force d'entraînement en rotation depuis un arbre de sortie (19) doté d'un pignon (10) destiné à s'engrener avec un élément denté (107) fixé à une tour (102) de l'éolienne (101) ;
- un boîtier (12) auquel le moteur électrique (100) peut être attaché et à l'intérieur duquel le mécanisme réducteur de vitesse (11) est disposé ;
- un premier élément d'étanchéité (14) qui est disposé entre le moteur électrique (101) et le boîtier (12) pour étanchéifier une huile lubrifiante dans le boîtier (12) ;
- une unité d'étanchéité (16) qui est disposée entre le boîtier (12) et l'arbre de sortie (19) pour étanchéifier l'huile lubrifiante dans le boîtier (12) ; et
- un clapet de décharge (13) qui comprend un chemin de communication (34) en communication avec le boîtier (12) et un corps de clapet (32) qui ouvre une ouverture (34b) du chemin de communication (34) vers l'extérieur, situé sur une face d'extrémité supérieure du chemin de communication (34), en réponse à une augmentation de la pression gazeuse dans le boîtier (12) et ferme ladite ouverture (34b) en réponse à une diminution de ladite pression, et qui est prévu sur une face d'extrémité supérieure du boîtier (12) où le moteur électrique (100), qui peut être disposé au-dessus du boîtier (12), peut être attaché,
dans lequel une portion d'épaulement (23) du boîtier (12) qui est formée en s'étendant vers l'intérieur de manière fléchie en forme d'étage et qui est disposée au-dessus du niveau d'huile (25) de l'huile lubrifiante dans le boîtier (12), et une portion de paroi (22) du boîtier (12) qui est disposée à l'intérieur de la portion d'épaulement (23) dans la direction radiale du boîtier (12) et qui s'étend dans une direction de haut en bas sont formées au niveau d'une portion sur la face d'extrémité supérieure du boîtier (12), et
dans lequel le clapet de décharge (13) est attaché au boîtier (12) de manière à être disposé en saillie vers le haut, et est disposé de telle sorte qu'une autre ouverture (34a) du chemin de communication (34) dans le boîtier (12) est située à l'intérieur, dans la direction radiale du boîtier (12), de la portion d'épaulement (23) et à l'extérieur, dans la direction radiale du boîtier (12), de la portion de paroi (22) dans le boîtier (12).

2. Dispositif d'orientation (1) pour éolienne selon la revendication 1, dans lequel le boîtier (12) comprend :
- un corps principal de boîtier (17) qui est formé de manière tubulaire et à l'intérieur duquel le mécanisme réducteur de vitesse (11) est disposé ; et
- une bride de moteur (18) à laquelle le moteur électrique (100) peut être attachée avec le premier élément d'étanchéité (14) pris en sandwich entre ceux-ci, et qui est attachée au corps principal de boîtier (17) de manière à recouvrir une portion d'ouverture disposée de manière à être orientée vers le haut dans le corps principal de boîtier (17),
dans lequel un second élément d'étanchéité (15) destiné à étanchéifier l'huile lubrifiante dans le boîtier (12) est disposé entre le corps principal de boîtier (17) et la bride de moteur (18), et
dans lequel la portion de paroi (22) est formée au niveau de la bride de moteur (18) sous la forme d'une portion tubulaire à l'intérieur de laquelle l'arbre de sortie (19) du moteur électrique (100) peut être disposé.

3. Dispositif d'orientation (1) pour éolienne selon la revendication 2, dans lequel la clapet de décharge (13) est disposé de telle sorte qu'une portion d'extrémité supérieure de celui-ci est située au-dessus de la bride de moteur (18) et en dessous d'une portion de tête d'un boulon de fixation (1.08) destiné à attacher le moteur électrique (100) à la bride de moteur (18).

4. Dispositif d'orientation (1) pour éolienne selon une quelconque des revendications 1 à 3,
comprenant en outre un clapet d'aspiration (39) qui est fixé au clapet de décharge (13) et peut aspirer de l'air extérieur vers le boîtier (12),
dans lequel le clapet d'aspiration (39) comprend un chemin de communication d'aspiration (43) en communication avec le chemin de communication (34) et avec l'extérieur, et un corps de clapet d'aspiration (41) Qiu ouvre une ouverture (43a) qui est orientée vers le bas sur une face du chemin de communication d'aspiration (43) qui est opposée à une face en communication avec le chemin de communication (34), en réponse à une diminution de pression gazeuse dans le boîtier (12), et ferme ladite d'ouverture (43a) en réponse à une augmentation de ladite pression.
